# EUROPÄISCHE PATENTANMELDUNG

(11) **EP 4 527 728 A1**
(43) Veröffentlichungstag der Anmeldung: **26.03.2025**
(21) Anmeldenummer: 24193571.7
(22) Anmeldetag: 08.08.2024
(51) Int. Cl.: B62K 27/00, B62J 9/23

(54) **EINE MULTIFUNKTIONALE FEST AN DER SEITE EINES ZWEIRADS INSTALLIERTE KLAPPBARE TRANSPORT-VORRICHTUNG, DIE SICH ALS FAHRRADANHÄNGER, FAHRRAD-SEITENTASCHE, TRANSPORTROLLER, SACKKARRE, SOWIE ANHÄNGER FÜR E-SCOOTER EIGNET**

(30) Priorität: 20.09.2023 DE 102023003215
(71) Anmelder: Izadpanahi, Mohammad, 79108 Freiburg (DE)
(72) Erfinder: Izadpanahi, Mohammad, 79108 Freiburg (DE)

(57) **Zusammenfassung**

Gegenstand dieses Patents wird Erfindungsgemäß dadurch gekennzeichnet, dass es sich um eine an der Seite eines Zweirads mit Hilfe eines Verbindungsarm 1 und Haken angebrachte Klapphänger-Vorrichtung handelt, bestehend aus einem multifunktionalen Rollbrett aus robustem, leichtem Metallblech 5, welches zwecks Förderung von Waren oder einer weiteren Person über bis zu vier aufklappbaren bzw. steckbaren Seitenwände 7 verfügt, mit deren Hilfe die Vorrichtung sich in Handumdrehen in eine Fahrrad-Seitentasche, eine Fahrradanhängerbox, einen großflächigen Zweiradanhänger, einen Zweiradanhänger für Personentransport, einen E-Scooter-Anhänger, einen eigenständigen Transportroller und eine eigenständige Sackkarre verwandeln lässt.

## Beschreibung

001 Zweirad-Anhänger gibt es bereits in zahlreichen Varianten, jedoch sind diese meistens nur auf bestimmte Anwendungen und Rahmenformen von Fahrzeugen eingeschränkt.

002 Reine Fahrradanhänger sind indessen großformatig gebaut und eignen sich somit nicht für einen schnellen und spontanen Transport von großen und sperrigen Objekten - auch eignen sie sich nicht für kleinere Zweiräder wie z.B. E-Scooter, auch E-Roller genannt (Gemeint sind Tretroller mit elektronischem Hilfsmotor). Reine Zweirad-Gepäckträger wiederum, wie man sie von Fahrrädern kennt, eignen sich kaum für den Transport von sperrigen und schweren Gegenständen, sodass für den Transport von größeren Gegenständen mit einem Zweirad, das Vorhandensein eines Anhängers nötig wäre, den man allerdings nicht immer parat hat.

Eine Vorrichtung, die alles in einem vereint, wäre eine gute Sache - Zudem wäre eine Vorrichtung, die aus einem klappbaren Modul besteht und sich an den Rahmen eines Zweirads montierten lässt und sich bei Bedarf zu einem Anhänger herunterklappen lässt, sodass man damit sowohl Waren als auch eine weitere Person mitführen könnte, eine praktische Sache. Im Anschluss an das bereits angemeldete Deutsche Patent mit der Nummer 102022003282.1, und 102023003215.8 soll hier ein europäisches Patent angemeldet werden, dessen Schutz neben Deutschland auch auf weitere europäische und zum Teil auch auf nicht europäische Länder ausgeweitet werden kann.

003

### Die übersichtliche und allgemeine Beschreibung der Vorrichtung:

Gegenstand dieses Patents wird erfindungsgemäß dadurch gekennzeichnet, dass es sich um einen Klapphänger für Zweiräder handelt, bestehend aus einem multifunktionalem Rollbrett 5, welches mindestens zwei kleine Rollen 8 an seinem unteren Ende aufweist, sowie bis zu vier aufklappbare Seitenwände 7, wobei das Rollbrett 5 über einen Verbindungsarm 1 verfügt, der mit einem Ende direkt an die hintere Achse des Rades verschraubt ist und mit dem anderen Ende über ein Doppelgelenk oder Kugelgelenk mit dem Rollbrett entweder verschraubt ist oder dort mit Hilfe von z.B. Steckbolzen gebunden ist - so kann der Klapphänger mit Hilfe von z.B. Haken oder Bänder sicher an der Seite eines Zweirads stets mitgeführt und so zusätzlich als Fahrrad-Seitentasche agieren und bei Bedarf, zwecks Transport von Waren oder einer weiteren Person, mühelos zu einem Anhänger nach unten geklappt werden.

Das Rollbrett verfügt über zwei bis vier aufklappbare Seitenwänden 7 (eine vorne, eine hinten und zwei seitliche), die bei Bedarf sich nach oben zu einer Box hochklappen/hochdrehen lassen, und ansonsten sich bei Bedarf waagrecht nach unten zu einer vergrößerten Ablagefläche für den Transport von größeren Waren umklappen lassen - zusätzlich lassen sich die Wände für den Transport einer weiteren Person zusammenklappen, sodass die zu mitführende Person auf einen Stapel von stabilen Blechen sicher stehen kann.

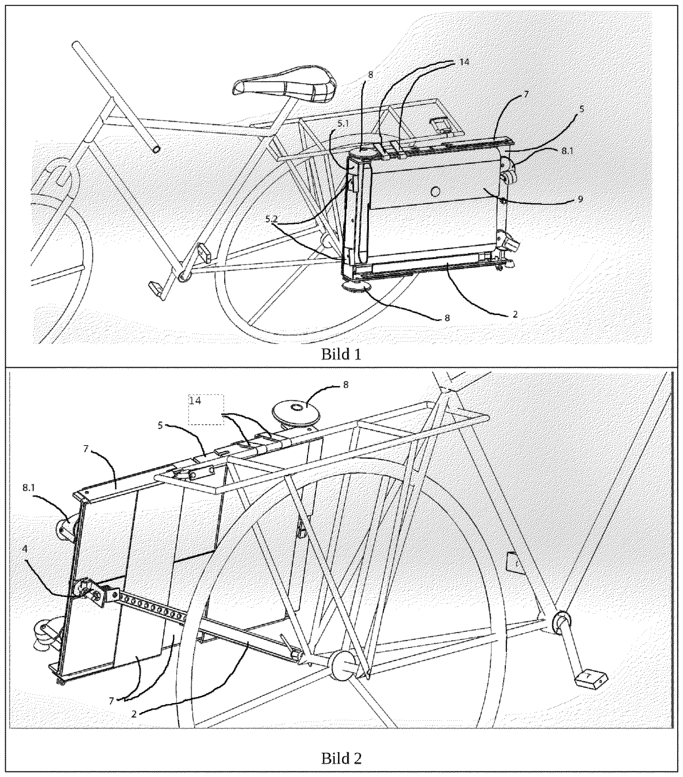

Weiterhin ist auf der Unterseite des Rollbretts eine zusammenklappbare Tasche aus stabilem Material angebracht, die bei Bedarf im hochgeklappten Modus als ganz normale Fahrrad-Seitentasche verwendet werden kann (Bild 1). Ferner bietet die Vorrichtung für den Transport von Personen einen ausziehbaren Haltegriff 2 (z.B. Ein Teleskoprohr 2 mit einem ausziehbaren Griff 2.1), der unter dem Rollbrett aufbewahrt wird und bei Bedarf zwischen Hinterradachse und eine an dem Gepäckträger angebrachte Klemmhalterung 13 eingespannt wird, sodass die zu mitfahrende Person sich an dessen ausziehbaren Griff festhalten kann.

Dank dem oben erwähnten ausziehbaren Teleskoprohr und dessen Haltegriff 2.1, lässt sich der Anhänger auch eigenständig, also unabhängig vom Vorhandensein eines Zweirads als ein "Transportroller mit Griff für den Transport von Waren an der Hand oder in Handumdrehen durch Umstecken des Haltegriffs sogar als Sackkarre führen. Zusätzlich verfügt die Vorrichtung über einen für E-Scooter bzw. E-Roller (elektrische Tret-Roller) passende Verbindungsarm 10, sodass die Vorrichtung zwecks Transport von Waren auch an einem E-Scooter (elektrischer Tretroller) angehängt werden kann.

Zwecks Überwindung des Rollwiderstandes bzw. damit der Transport von schweren Waren oder einer weiteren Person einfacher vonstattengeht, kann das Rollbrett statt mit passiven Rädern mit aktiven Rädern (mit integrierten Nabenmotoren) ausgestattet sein, die sich von einem kleinen auf der unteren Seite des Rollbretts 5 angebrachten Akku mit Strom versorgen lassen, wobei die Regelung der Geschwindigkeit der Motoren über ein typisches Steuergerät bzw. eine H-Brücke erfolgt das/die sich wiederum von einem an der Vorrichtung eingebauten Bewegungssensor steuern lässt.

Ferner kann die Vorrichtung zum Erreichen eines besseren Bremsverhalten über eine Bremsfunktion verfügen, die sich entweder mechanisch/Hydraulisch über den am Verbindungsarm 1 integrierten Sensor betätigen lässt oder über einen elektrischen Bewegungssensor.

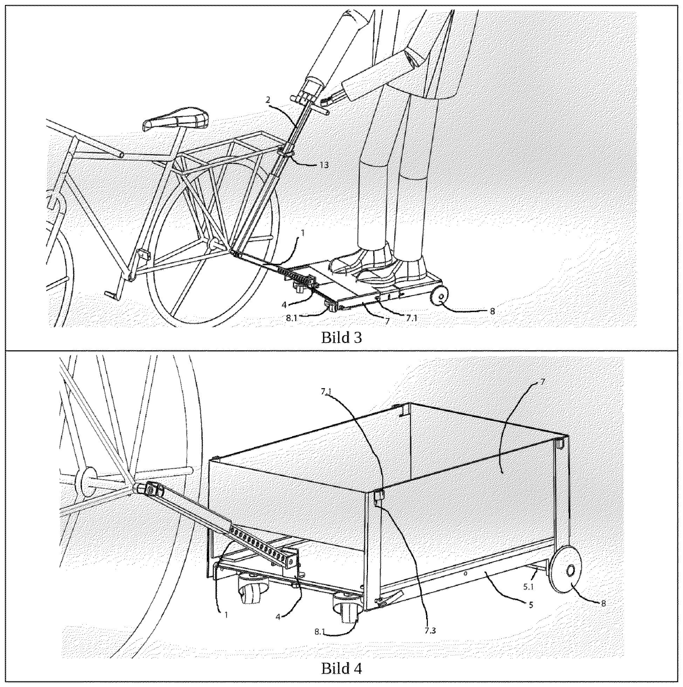

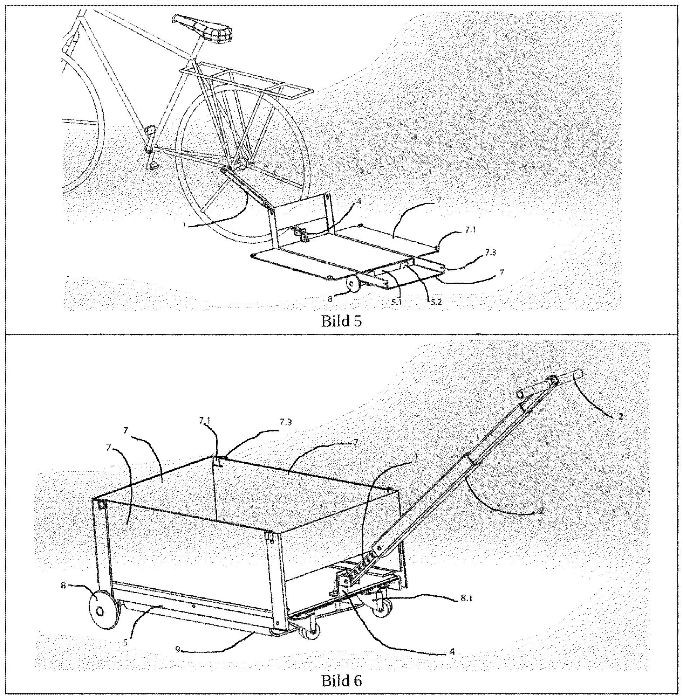

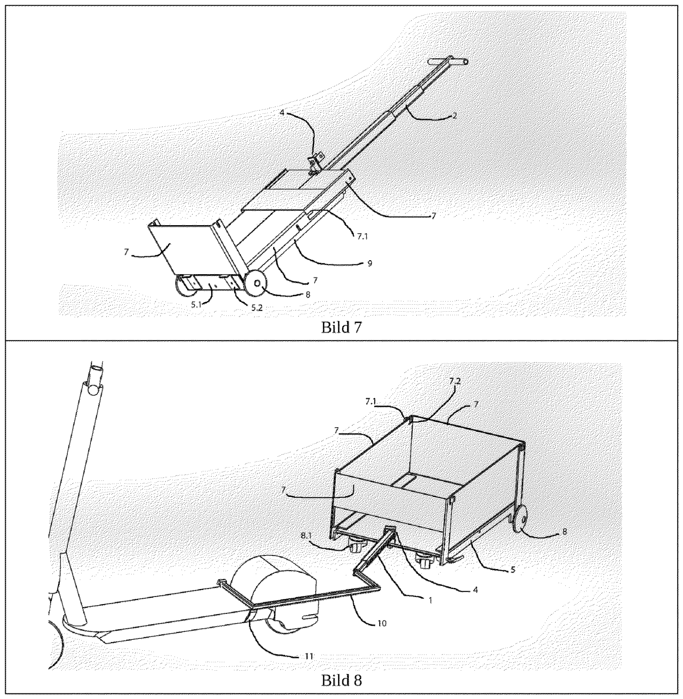

Somit können mit der Klapphänger-Vorrichtung folgende 7 unterschiedliche Funktionen ausgeübt werden:
1. Im hochgeklappten Modus, an der Seite eines Fahrrads kann die Vorrichtung beim Ausklappen bzw. Herausziehen der unter dem Rollbrett der Vorrichtung angebrachten Tasche als Fahrrad-Seitentasche bzw. Seitenkorb dienen (Bild 1 & 2).
2. Als Anhänger zum Mitführen einer weiteren Person, wobei der Anhänger sich dann im heruntergeklappten Modus, aber mit zusammengeklappten und aufeinander gestapelten Seitenwänden und aufgeklapptem oder herausgezogenem Teleskopgriff befindet (Bild 3).
3. Als kleiner kastenförmige Anhänger, mit dem viele kleinere Gegenstände transportiert werden können, wobei sich die Vorrichtung dann in ihrem heruntergeklappten Modus, aber mit hochgeklappten Seitenwänden befindet (Bild 4).
4. Als großflächiger Anhänger, mit dem der Transport von großen Gegenständen, wie z.B der eines Kühlschranks möglich ist, wobei sich der Anhänger also in dem Modus mit dem horizontal heruntergeklappten 4 Wänden befindet (Bild 5).
5. Als frei gekoppelter Transportroller/Transportkarre, der sich mit Hilfe des angesteckten Teleskop-Griffs führen lässt. (Bild 6).
6. Als Sackkarre, dadurch wird der Teleskop-Griff der Vorrichtung an der vorderen Seite des Rollbretts festgeschraubt, wobei die untere Wand des Rollbretts mit Hilfe der Stoppern 5 Senkrecht zu dem Basisblech umgeklappt wird, sodass das Rollbrett wie eine Sackkarre auf seine zwei hinteren Rollen schräg an der Hand geführt werden kann (Bild 7).
7. Als Anhänger für einen E-Scooter/ E-Roller (Bild 8) - hierzu wird das Rollbrett Mithilfe eines weiteren Verbindungsarm 10 mit dem Rahmen des E-Scooter verbunden.

### Beschreibung der Vorrichtung im Detail bzw. im Einzelnen:

004

### Die Anbindung der Vorrichtung an den Rahmen des Zweirads erfolgt über einen Verbindungsarm 1:

Verfügt das Rollbrett über vier fest installierten Räder, so besteht der Verbindungsarm 1 aus einem einfachen Stab oder einem Rohr, welcher/Welches mit einem Ende über einen Doppelgelenk oder einen Kugelgelenk an das Rollbrett verbunden ist und mit dem anderen Ende direkt an die Achse des Hinterrads verschraubt ist, wobei der Verbindungsarm 1 aus zwei aneinander/ineinander gesteckten/geschobenen Elementen besteht.

Verfügt das Rollbrett dagegen über zwei Hintere fest installierte Räder und mindestens ein aus schiebbares Vorderrad, dann teilt sich der Verbindungsarm mit den hinteren Rädern die Last und wird daher L-förmig, und aus robustem Metall erstellt sein und mit einem Ende über ein Doppelgelenk oder Kugelgelenk mit dem Rollbrett 5 der Vorrichtung verbunden, und mit dem anderen Ende in eine Kopplungsvorrichtung 3 gesteckt sein. Der Verbindungsarm 1 der Vorrichtung kann in diesem Fall aus z.B. einem metallischen Rechteck-, Rund-, Oval oder Quadratrohr oder auch Rund-, oder Rechtecksstab oder gar aus einer Mischung aus Quadratrohr, welches orthogonal mit einem Rundrohr verbunden/verschraubt/verschweißt ist, erstellt sein und weist mindestens eine Biegung bzw. Abkantung auf, sodass diese die Form eines L hat, wobei dessen kürzerer Arm sich in Höhe/Länge verstellen lässt. Dabei hat der längere Arm des L-förmigen Verbindungsarms zur Aufgabe, den Anhänger an dem Rechtecksrohr der Kopplungsvorrichtung 3, in dem es gesteckt ist mit Hilfe einer Sicherung, in nur den folgenden zwei Positionen; Hochgeklappt an der Seite des z.B.

Fahrrads und heruntergeklappt als Anhänger für den Transport von Waren oder einer weiteren Person, zu sichern. Der Verbindungsarm kann an seinem längeren Arm ein rundliches Profil aufweisen, welcher als Achse für das Umklappen des Arms nach oben und unten dient.

Der längere Arm des L-förmigen Verbindungsarm kann zwecks Fixierung an der Kopplungsvorrichtung Bohrungen aufweisen, in denen ein Sicherungsstift, eine Schraube oder ein Sicherungsbolzen gesteckt werden kann - die Fixierung kann aber auch über eine Klemme, einen Kugelstift oder einen Schnellspanner erfolgen.

005 Verfügt das Rollbrett sonst über Vierräder (zwei Gelenkräder vorne, zwei Räder hinten) so wird eine Kopplungsvorrichtung nicht nötig sein. Verfügt dagegen die Vorrichtung über zwei Hinterräder und mindestens ein aus schiebbares/ aus schraubbares Vorderrad, dann wird eine Kopplungsvorrichtung wie folgt beschrieben nötig sein.

Damit die Kopplungsvorrichtung 3 universell an alle unterschiedlichen Formen der Rahmen der Zwei- oder Dreiräder angepasst werden kann, besteht das Kopplungsteil der Vorrichtung aus mindestens drei Teilen - z.B. 3 Flacheisen/Flachstäben die zusammengebaut die Form eines typischen "Dreiecks" haben, wobei der Arm 3.1 der Kopplungsvorrichtung aus einem stabilen z.B. Flachmetall bestehen kann, das mit dessen oberen Ende rückseitig an den Streben eines z.B. Fahrrads verschraubt sein kann und vorderseitig entsprechend der Winkel der Streben des Fahrrads an dem anderen Stab 3.2 des Dreiecks fixiert sein kann.

Über eine Bohrung an dem anderen Ende des Arm 3.1 kann dieser mit der Schraubachse des Hinterrads verschraubt sein oder an einem weiteren Punkt des Fahrradrahmens gesichert werden. Dh. Der Stab 3.2 ist rückseitig an dem Fahrradrahmen fixiert und vorderseitig mit dem Verbindungsrohr 3 und sonst mit dem Stab 3.1.

Das Profil 3.2 der Kopplungsvorrichtung kann ebenfalls aus einem flachen Metallstab sein und hat zur Aufgabe ein Anpassen an unterschiedlichen Rahmenformen der Zweiräder zu ermöglichen, sodass das Verbindungsrohr in dem der L-Arm gesteckt ist, stets horizontal zu der Fahrbahn eingestellt ist - zusätzlich dient dieses Profil als ein weiterer Querlenker dazu, die abgefangene Energie über das Rechtecksrohr 3.3 der Kopplungsvorrichtung, in den Rahmen des Fahrrads weiterzuleiten, wobei das Rechtecksrohr 3.3 der Kopplungsvorrichtung Bohrungen aufweisen kann.

### Die Verbindung des Rollbretts mit dem Verbindungsarm 1:

006 Die Anbindung des Anhängerteils/Rollbretts 5 mit dem Verbindungsarm 1 kann über ein einfaches bekanntes Kugelgelenk oder ein Doppelgelenk 4 erfolgen, das wie aus den Bildern zu entnehmen ist, vorne auf dem oder unter dem Rollbrett sitzt und mit dem Verbindungsarm 1 entweder verschraubt oder daran mit einem Bolzen gebunden ist.

007

### Die Beschreibung des Rollbrettes der Vorrichtung:

Das Anhängerteil/Rollbrett 5 der Vorrichtung besteht vorzugsweise aus einem zu einem U-Form oder Wannenform abgekanteten Metallblech, vorzugsweise aus Riffelblech oder gar aus einem Metall-Rahmen z.B. aus leichten Aluminiumröhren, die entweder miteinander zu einem Rahmen verschweißt sind, oder mit Hilfe von Schrauben oder Nieten mit einer stabilisierenden festen HPL-Platte /Industrieplatte zu einem einheitlichen gerahmten und robusten Rollbrett fixiert sind. Die HPL-Platte wird dann gleichzeitig auch als Ablagefläche 5.1 für das Aufstellen von Waren und Gegenständen dienen. Das Basisblech/Basisteil der Vorrichtung kann allerdings auch aus anderen Materialien hergestellt sein - so wie aus z.B. zusammen gepresstem Kunststoff.

Ist das Rollbrett nicht aus einem verkanteten oder gebogenen Blech hergestellt, sondern aus einem Rohr-Rahmen, so kann zusätzlich ein ausziehbares Endteil für Vergrößerung der Ablagefläche sorgen. Ist das Rollbrett dagegen, wie hier aus den beigefügten Bildern zu entnehmen ist, aus abgekantetem Blechen hergestellt, so hat sein Basisblech die Form eines U oder die Form einer Wanne mit kleinen nach unten abgekanteten Seiten/ Laschen, wobei über das Basisblech mindestens zwei, vorzugsweise vier klappbare Wände aus z.B. Blech angebracht sind, die bei Bedarf zu einer Box oder zu einer größeren Auflagefläche zusammengesteckt werden können - die Vergrößerung der Ablagefläche erfolgt in dem Fall durch das Umklappen bzw. umstecken der Wänden.

### Die Seitenwände der Vorrichtung:

008 Auf dem bzw. an dem Rollbrett 5 sind mindestens zwei, vorzugsweise vier klappbare zu L-Form und U-Form abgekantete Seitenwände 7 aus z.B. Blech angebracht, die sich hoch und herunterklappen/drehen/umstecken lassen, wobei die hintere und vordere Wand eine U-Form haben, wogegen die Seitenwände eine L-Form. Die Seitenwände können je nach Ausführung von flach, starr bis weich und aus unterschiedlichen Formen und Materialien erstellt sein. Vorzugsweise sind die Wände, wie auf den Bildern zu sehen ist, aus leichtem Metallblech erstellt und weisen Laschen 7,1 Bohrungen und Schlitze 7,3 auf, die für das Verbinden und umklappen der erwähnten Wänden gedacht sind. Die kleinere Wände sind als vorder-, bzw. Rückwand zu verstehen und die länglicheren als Seitenwände.

Durch das Umstecken der Seitenbleche und herumdrehen der Vorder-, und Rückwand wird der Vorrichtung das Ausüben von 6 unterschiedlichen Funktionen ermöglicht: 1. Für den Transport von kleineren Gegenständen lassen sich die Wände zu einer Box hochklappen, wobei die Vorder-, sowie Rückwand links und rechts über jeweils eine Bohrung mit dem Basisblech so verschraubt sind, sodass diese sich um die Achse der Schrauben wie Scharniere nach Oben und unten drehen lassen - mit dem einstecken der Laschen der Seitenwänden in den Schlitzen der Vorder-, und Rückwand wird dann eine Box generiert. 2. Für den Transport von Personen lassen sich alle Wände zu einer einheitlichen kleinen, aber sich gegenseitig stabilisierende Fläche zusammenfalten bzw. aufeinanderstapeln, auf denen die zu fahrende Person stehen kann und 3. Für den Transport von größeren Gegenständen lassen sich die Wände durch das horizontale Herunterklappen der Seitenwänden zu einem Transporthänger mit einer entsprechend größeren Fläche umklappen und 4. Für die Verwendung der Vorrichtung als Sackkarre, lässt sich die Rückwand mit Hilfe der zwei Stopper 5.3 senkrecht stehend zu dem Basisblech umklappen, sodass die Vorrichtung die Form einer Sackkarre hat.

Sind die Seitenwände nicht aus rutschsicheren z.B. Riffelblech hergestellt, so können die Wände auf ihren Oberflächen Antirutsch Elemente aufweisen.

Die Gesamtform der Vorrichtung muss nicht wie auf den Bildern dargestellt eckig sein, die kann auch konstruktionsbedingt gar eine eher rundliche oder eher ovale Form oder gar eine Mischform haben.

009 Um das Basisblech zu stärken, können unter dem Basisblech Winkeln 5.1 oder Rohre aus leichtem Metall eingesetzt/eingebaut sein.

010

### Die Räder des Rollbretts:

Verfügt wieder das Rollbrett über zwei vordere Gelenkräder und zwei hintere Räder, so werden die Rollen allesamt doppelt gelagert und vorzugsweise aus z.B. Inlinestkaterollen sein. Die zwei hintere Räder/Rollen können selbstleuchtend sein, sodass ein Anbringen von Extra Rückleuchten überflüssig ist.

Sitzt das Rollbrett dagegen hauptsächlich auf zwei hintere Rollen, dann kann das Rollbrett der Vorrichtung vorne mindestens zwei kleine und umklappbare bzw. ausschraubbare Rollen 8.1 besitzen, die sich in der Transportroller-Funktion für das leichtere Mitführen des Rollbretts an der Hand, zur Fahrbahn ausklappen bzw. ausschrauben lassen, sodass die Last der Ware gleichmäßig auf vier Räder verteilt ist.

Um den Rollwiderstand der Räder zu verringern und damit einhergehend die Fahrt mit der Vorrichtung für z.B. Fahrräder ohne elektrischen Hilfsmotor zu erleichtern, können die zwei hintere Rollen gänzlich aus zwei kleinen aktiven Räder sein, in deren Kern Elektromotoren integriert sind (Nabenmotoren), wobei die Motorsteuerung und Versorgung der Motoren mit dem Strom mit Hilfe von mindestens einem kleinen Akku und einem Steuergerät erfolgen kann, die unter dem Rollbrett der Vorrichtung integriert sind - die Aktivierung der Motoren kann dann z.B. über dem am Hebelarm angebrachten Sensor bzw. Potentiometer oder über einen vorgesehenen Bewegungssensor erfolgen. Die Hinterräder können selbst rot leuchtend sein, sodass ein Anbringen von Rücklichter an das Rollbretts überflüssig wird.

### Das eigenständige Bremssystem der Vorrichtung:

011 An den hinteren Räder können zum besseren Bremsverhalten eigenständige Bremsvorrichtung angebracht sein, die aus z.B. Bremsbacken bestehen und beim Betätigen von Außen auf die Räder Druck ausüben, wobei das Betätigen der Bremsen kann mechanisch/Hydraulisch über einen z.B. an dem Verbindungsarm 1 angebrachten mechanischen Sensor erfolgen - das Weiterleiten der abgefangenen Energie kann wiederum hydraulisch, mechanisch per Seil oder Stab an die Bremsbacken erfolgen. Das Betätigen der Bremse kann aber auch gänzlich elektrisch erfolgen, wobei in dem Fall die Bremsvorrichtung über einen elekronischen Bewegungssensor verfügt, der einen Signal an das elektrisch betriebene Bremssystem sendet und so einen Bremsvorgang auslöst.

### Der Halterungsgriff/ Halterungsarm der Vorrichtung für den Transport von Personen und Waren:

012 Zur Beförderung von Personen und sonst für die Funktionen als Transportroller und Sackkarre dient bei der Vorrichtung ein multifunktionales Teleskoprohr mit seinem herausnehmbaren Haltegriff, das an der Unterseite des Rollbretts aufbewahrt wird. Dieser Halterungsgriff kann bei Bedarf zwischen der Achse des Hinterrads und einem an dem Gepäckträger des Fahrrads angebrachten Halterung 13 eingespannt werden, sodass die zu mitfahrende Person sich daran festhalten kann. Sonst hat dieses Teil der Vorrichtung zur Aufgabe, dass der Haltegriff samt seines Teleskoprohrs als ein in die Höhe verstellbarer Griffstab für die Nutzung der Vorrichtung als Sackkarre, sowie Transportroller dienen lässt und hierfür an dem Vorderteil des Rollbretts angeschraubt bzw. angehängt wird. Der Haltegriff kann aber auch unabhängig des erwähnten Teleskoprohrs als ein eigenständiges klappbares Element an dem Gepäckträger eines z.B. Fahrrads installiert sein.

### Das Anhängen des Rollbretts an der Seite eines Fahrrads erfolgt über Haken oder Bänder:

014 Das seitliche Aufhängen/Anhängen/Anbringen des Rollbretts in seinem zusammengeklappten Modus an der Seite eines Zweirads - z.B. an dessen Gepäckträger, erfolgt entweder über Bänder wie z.B. Spanngurte oder über mindestens einen Haken aus z.B. Metall.

### Die Vorrichtung lässt sich auch von E-Scootern ziehen:

016 Für das Ziehen des Rollbretts auch von E-Scootern ist ein eigener Verbindungsarm 10 vorgesehen, der wie auf den Bildern zu sehen ist, aus einem zweimal senkrecht gebogenen/geknickten/abgekanteten Element aus z.B. stabilem Metall besteht, welches mit einem Ende auf die Trittfläche des E-Scooter aufgelegt und dort mit Bändern befestigt wird, wobei dessen andere Ende mit Hilfe eines z.B. Steckbolzen mit dem Verbindungsarm 1 der Vorrichtung gesichert wird.

### Stückliste:

1 Der Verbindungsarm.
2 Teleskoprohr mit Griff
   2.1 Der Griff.
3 Kopplungsvorrichtung bzw. das Rohr der Kopplungsvorrichtung
   3.1 Hauptarm der Kopplungsvorrichtung wird an den Streben oben und unten fixiert.
   3.2 Dreharm der Kopplungvorrichtung lässt sich durch das Drehen an den Rahmenwinkel des Fahrrads einstellen.
4 Kugelgelenk bzw. Doppelgelenk für das frei drehbare Anbindung vom Hauptarm zu dem Rollbrett der Vorrichtung.
5 Das Rollbrett /Anhängerteil der Vorrichtung.
   5.1 Der Verstärkungswinkel
   5.2 Der Stopper
7 Die Seitenwänden der Vorrichtung (2 Seitliche Wände, sowie eine
   eine Vorderwand und eine Hinterwand).
   7,1 Die umgebogene Verbindungslasche.
   7,2 Der Aufnahme-Schlitz für die Verbindungslasche 7,1.
8 Die Hinterräder/ hintere Rollen des Rollbretts
   8.1 Das vordere Gelenkrad der Vorrichtung
9 Die Seitentasche
10 Verbindungsarm zu dem E-Scooter.
11 Die Spanngurt für das sichern des Verbindungsarm 10
12 ---
13 Klemmhalter für den Halterungsgriff
14 Der Haken

## Patentansprüche

1. Gegenstand dieses Patents wird erfindungsgemäß durch Anspruch 1 **dadurch gekennzeichnet, dass** es sich um eine an der Seite eines Zweirads mit Hilfe eines Verbindungsarm 1 und Haken angebrachte Klapphänger-Vorrichtung handelt, bestehend aus einem multifunktionalen Rollbrett aus robustem, leichtem und mit Profilen gestärktem Metallblech 5, welches zwecks Förderung von Waren oder einer weiteren Person über mindestens zwei kleine Rollen 8 an seinem unteren Ende, sowie bis zu vier aufklappbaren bzw. steckbaren Seitenwände 7 verfügt, mit deren Hilfe die Vorrichtung sich wie auf den beigefügten Bildern zu sehen ist, in Handumdrehen in eine Fahrrad-Seitentasche, eine Fahrradanhängerbox, einen E-Scooter-Anhänger, einen großflächigen Zweiradanhänger, einen Zweiradanhänger für Personentransport, einen eigenständigen Transportroller und eine eigenständige Sackkarre verwandeln lässt, wobei die Verbindung des Rollbretts zu dem Rahmen eines Zweirads über einen in Länge verstellbaren Verbindungsarm 1 erfolgt, welcher mit einem Ende an die Achse des Hinterrads frei drehbar verschraubt ist und mit dem anderen Ende ist er gesteckt oder gekoppelt an das Doppelgelenk/ Kugelgelenk des Rollbretts der Vorrichtung.

2. Eine Klapphänger-Vorrichtung nach Anspruch 1, **dadurch gekennzeichnet, dass** sie einen Verbindungsarm 1 aufweist, der aus einem metallischen Rechteck-, Rund-, Oval oder Quadratrohr oder auch Rund-, oder Rechteckstab oder gar aus einer Mischung aus unterschiedlichen zusammengesteckten Röhren oder Stäben erstellt sein kann und entweder aus zwei ineinander gesteckten/ geschobenen Elementen besteht, die eine direkte Verbindung zwischen dem Rollbrett der Vorrichtung und der Hinterachse des Zweirads ermöglichen oder weist mindestens eine Biegung bzw. Abkantung auf, sodass diese die Form eines L hat.

3. Eine Klapphänger-Vorrichtung durch Anspruch 3, **dadurch gekennzeichnet, dass** dessen Rollbrett sich gemäß der beigefügten Bildern über ein einfaches Kugelgelenk oder ein Doppelgelenk mit dem Verbindungsarm 1 und damit einhergehend mit dem Rahmen des Zweirads verbinden lässt.

4. Eine Klapphänger-Vorrichtung durch Anspruch 4, **dadurch gekennzeichnet, dass** das Rollbrett 5 der Vorrichtung aus einem z.B. vorzugsweise leichtem Metall Blech besteht, das z.B. zu einer U-Form gekantet/gebogen und mit z.B. weiteren Profilen gestärkt ist, Wobei das Rollbrett der Vorrichtung auch aus leichten Metallröhren bestehen kann, die zusammen mit einer stabilen HPL-Platte zu einem Rahmen bzw. zu einer Ablagefläche verschweißt, verschraubt oder vernietet sein können.

5. Eine Klapphänger-Vorrichtung durch Anspruch 5, **dadurch gekennzeichnet, dass** sich auf dessen Rollbrett bis zu vier klappbare oder steckbare Seitenwände befinden, wobei die Seitenwände ebenfalls aus Blech oder anderen Materialien hergestellt sein können und gemäß der beigefügten Bildern zu U-Form oder L-Form gekantet bzw. gebogen sein können und aneinander gesteckt, gebunden oder verschraubt werden können.

6. Eine Klapphänger-Vorrichtung durch Anspruch 6, **dadurch gekennzeichnet, dass** deren Rollbrett mindestens zwei kleine und platzsparende Rollen 8 aufweist, die in unterschiedlichen Ausführungen aus passiven z.B. Inlinerrollen oder aus aktiven z.B. Nabenmotoren sein können, wobei das Vorderrad bzw. die Vorderräder der Vorrichtung aus Gelenkrädern bestehen, und die Hintere Rollen selbstleuchtend sein können.

7. Eine Klapphänger-Vorrichtung durch Anspruch 7, **dadurch gekennzeichnet, dass** die Rollen über eigenständige Bremsvorrichtung verfügen können, die sich über mechanischen, hydraulischen oder elektrischen Sensoren betätigen lässt.

8. Eine Klapphänger-Vorrichtung durch Anspruch 8, **dadurch gekennzeichnet, dass** diese für die Beförderung von Personen über einen extra Haltegriff verfügt, welcher z.B. als Teleskoprohr mit einem ausziehbaren Griff ausgestattet, und unten an dem Rollbrett aufbewahrt sein kann und bei Bedarf, zwecks Personenförderung mit seinem unteren Ende an die hintere Achse des Zweirads verschraubt werden kann und oben mit seinem Stiel mit einer Klemme an das Gepäckträger des Zweirads befestigt werden kann.

9. Eine Klapphänger-Vorrichtung durch Anspruch 9, **dadurch gekennzeichnet, dass** deren Anhängerteil mit Hilfe eines für E-Scooter vorgesehenen Verbindungsarm 10 auch an E-Scootern / E-Trettroller hängen lässt, wobei dieser Verbindungsarm wie auf den beigefügten Bildern zu sehen ist, aus z.B. einem zwei mal senkrecht gebogenen/ geknickten Element aus z.B. einem Metallrohr bestehen kann, wobei die Verbindungsarm 10 mit einer Seite auf die Trittfläche des E-Scooters gelegt und dort mit einem Band gesichert werden kann und mit der anderen Seite des Elements an den Doppelgelenk des Rollbretts gebunden/gesteckt werden kann.
